(19) Europäisches Patentamt

European Patent Office

Office européen des brevets

(11) **EP 1 009 123 A2**

(12) **EUROPEAN PATENT APPLICATION**

(43) Date of publication:
**14.06.2000 Bulletin 2000/24**

(51) Int. Cl.[7]: **H04L 1/00**

(21) Application number: **99124581.2**

(22) Date of filing: **09.12.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **09.12.1998 JP 35054798**

(71) Applicant: **NEC CORPORATION**
**Tokyo (JP)**

(72) Inventor: **Muraoka, Shinya**
**Minato-ku, Tokyo (JP)**

(74) Representative:
**Glawe, Delfs, Moll & Partner**
**Patentanwälte**
**Postfach 26 01 62**
**80058 München (DE)**

(54) **Reed-solomon receiving ciruit**

(57)     The receiving circuit of the invention calculates a moving average of electric power of received signals, and detects an interference wave and estimates locations of burst errors using the result of the calculation. Then the circuit supplies the estimated locations to a Reed-Solomon decoding circuit as error location information and the Reed-Solomon decoding circuit performs erasure correcting using the information. As a result, it is possible to restrain enlargement of redundancy and frequency band caused by correcting the burst errors.

FIG. 5

EP 1 009 123 A2

**Description**

BACKGROUND OF THE INVENTION:

Field of the Invention

The invention relates to a Reed-Solomon receiving circuit. In particular, the invention relates to a Reed-Solomon receiving circuit which is capable of correcting receiving data including burst errors.

Description of the Related Art

In the past, when transmission is carried out through a radio network burst errors may often occur on the radio network due to an interference wave (for example, a radar wave). Accordingly, it is necessary to correct the burst errors on a reception or receiver side by using such an error correcting circuit. On correcting the errors, it may be said that a block code is generally more preferable than a convolutional code because the block code has an advantageous characteristic as compared with the convolutional code.
Various proposals have been made about a plurality of Reed-Solomon code receiving circuits. The proposed circuits, however, have some shortcomings, as mentioned below.
One of the previous Reed-Solomon code receiving circuits is operable in response to Reed-Solomon codes to detect error locations and to correct data at each of the error locations. In such a previous Reed-Solomon code receiving circuit, a frequency band of a transmission path is undesirably widened, as the length of burst errors is increased.
Another previous Reed-Solomon code receiving circuit employs an interleave technique. In the circuit, it is advantageous to prevent a frequency band from enlarging, but on the other hand, there is a problem that a scale of the circuit and a delay time are increased.
Also, a receiving code circuit which employs an erasure correcting scheme has also been proposed. However, in this scheme, a characteristic of an error position detection depends on performance of an inner decoding circuit in the code receiving circuit.
Further, in order to solve the problem resulting from the erasure correction, an improved erasure correction circuit is disclosed in Japanese Laid Open Publication No. S56-8946 (namely, 8946/1981). However, in this method of the circuit, error correction can be effectively made, only when the number of errors is small.

SUMMARY OF THE INVENTION:

Herefore, it is an object of the invention to provide a circuit which is capable of suppressing an expansion or spread of a frequency band which is caused by correcting burst errors due to an interference wave. It is another object of the invention to provide a circuit of the type which is capable of decreasing a delay time without an interleave circuit which is needed to distribute burst errors, even if the burst errors last for a long time.
According to a first embodiment of the invention, a Reed-Solomon code receiving circuit is provided. The circuit comprises a demodulating circuit which demodulates receiving signals from a transmission path in a predetermined method, converts the demodulated signals to digital signals at a predetermined sampling rate, and produces the digital signals as data samples, a decision circuit which makes a decision for the data samples in a predetermined method and converts the data samples to serial base band signals, an S/P circuit which converts the serial base band signals to a predetermined number of bits of parallel data, an electric power measuring circuit which calculates a moving average of electric power of the data samples from the demodulating circuit at every sampling time, an error location estimating circuit which supplies signals representing whether or not burst errors occur in a block and signals representing the locations of the burst errors as error location signals based on the moving average, an RS decoding circuit which corrects errors and supplies information symbols except redundant symbols as parallel data in a unit of a symbol whenever a block of the parallel data are received from the S/P circuit, and which performs erasure correcting when the error location signals are received from the error location estimating circuit in advance, and a P/S circuit which converts the parallel data supplied from the RS decoding circuit to serial data.
According to a second embodiment of the invention, another Reed-Solomon code receiving circuit is provided. The circuit comprises a demodulating circuit which demodulates receiving signals from a transmission path in a predetermined method, converts the demodulated signals to digital signals at a predetermined sampling rate, and supplies the digital signals as data samples, a decision circuit which makes a decision for the data samples in a predetermined method and converts the data samples to serial base band signals, an S/P circuit which converts the serial base band signals to a predetermined number of bits of parallel data, a first deinterleave circuit which deinterleaves the parallel data supplied from the S/P circuit, an electric power measuring circuit which calculates a moving average of electric power of the data samples from the demodulating circuit at every sampling time, an error location estimating circuit which supplies signals representing whether or not burst errors occur in a block and signals representing the locations of the burst errors as error location signals based on the moving average, a second deinterleave circuit which deinterleaves the error location signals supplied from the error location estimating circuit and supplies the deinterleaved signals as error location signals, an RS decoding circuit which corrects errors and supplies information symbols except redundant symbols as parallel data in a unit of a symbol whenever a block of the parallel data are received from the first deinterleave circuit, and which performs erasure correcting when the error location signals are received from the second deinterleave circuit in advance, and a P/S circuit which converts the parallel data supplied from the RS decoding circuit to serial data.

According to a third embodiment of the invention, another Reed-Solomon code receiving circuit is provided. The circuit comprises a demodulating circuit which demodulates receiving signals from a transmission path in a predetermined method, converts the demodulated signals to digital signals at a predetermined sampling rate, and supplies the digital signals as data samples, a decision circuit which makes a decision for the data samples in a predetermined method and converts the data samples to serial base band signals, an inner decoding circuit which decodes the serial base band signals supplied from the decision circuit, supplies the decoded data, detects errors, and supplies locations of the detected errors as error location signals, an S/P circuit which converts the decoded data supplied from the inner decoding circuit to a predetermined number of bits of parallel data, an electric power measuring circuit which calculates a moving average of electric power of the data samples from the demodulating circuit at every sampling time, an error location estimating circuit which supplies signals representing whether or not burst errors occur in a block and signals representing the locations of the burst errors as error location signals based on the moving average, an SEL circuit selects the error location signals supplied from the inner decoding circuit or the error location signals supplied from the error location estimating circuit based on the signals representing whether or not burst errors occur, and supplies the selected signal as error location signals, an RS decoding circuit which corrects errors and supplies information symbols except redundant symbols as parallel data in a unit of a symbol whenever a block of the parallel data are received from the S/P circuit, and which performs erasure correcting when the error location signals are received from the SEL circuit in advance, and a P/S circuit which converts the parallel data supplied from the RS decoding circuit to serial data.

According to a fourth embodiment of the invention, another Reed-Solomon code receiving circuit which receives signals and corrects errors in the signals using Reed-Solomon code is provided, which comprises an electric power measuring circuit which calculates a moving average of electric power of the receiving signals, and an error location estimating circuit which supplies signals representing the locations of the burst errors as error location signals based on the moving average. And the Reed-Solomon code receiving circuit performs erasure correcting only when the error location signals are produced from the error location estimating circuit in advance.

According to a fifth embodiment of the invention, a method of correcting errors in response to signals using Reed-Solomon code is provided. The method comprises the steps of calculating a moving average of electric power of the receiving signals, supplying signals representing the locations of the burst errors as error location signals based on the moving average, and performing erasure correcting, when the error location signals are received.

According to a sixth embodiment of the invention, a recording medium readable by a computer is provided, which is tangibly embodying a program of instructions executable by the computer to perform a method of correcting errors in receiving signals using Reed-Solomon code. And the method comprises the steps of calculating a moving average of electric power of the receiving signals, supplying signals representing the locations of the burst errors as error location signals based on the moving average, and performing erasure correcting, when the error location signals are received.

According to a seventh embodiment of the invention, a method of detecting a burst error in response to a reception signal subjected to Reed-Solomon coding is provided. The method comprises the steps of calculating a moving average of electric power in the reception signal, and monitoring the moving average calculated to judge whether or not the burst error is caused to occur in the reception signal.

BRIEF DESCRIPTION OF THE DRAWINGS:

Fig. 1 shows a block diagram of a previous Reed-Solomon receiving circuit;
Fig. 2 shows a block diagram of another previous Reed-Solomon receiving circuit;
Fig. 3 shows a block diagram of still another previous Reed-Solomon receiving circuit;
Fig. 4 shows a block diagram of still another previous Reed-Solomon receiving circuit;
Fig. 5 shows a block diagram of a Reed-Solomon receiving circuit of a first embodiment of the invention;
Fig. 6 shows a diagram which is related with operation of a decision circuit in the Reed-Solomon receiving circuit shown in Fig. 1;

Fig. 7 shows time charts which represent operations of the first embodiment shown in Fig. 1.;

Fig. 8 shows a block diagram of a Reed-Solomon receiving circuit of a second embodiment of the invention;

Fig. 9 shows a mapping of interleave in the second embodiment of the invention;

Fig. 10 shows a mapping of deinterleave in the second embodiment of the invention;

Fig. 11 shows time charts which represent operations of the second embodiment shown in Fig. 4.;

Fig. 12 shows a block diagram of a Reed-Solomon receiving circuit of a third embodiment of the invention; and

Fig. 13 shows time charts which represent operations of the third embodiment shown in Fig. 8.

DESCRIPTION OF THE PREFERRED EMBODIMENT:

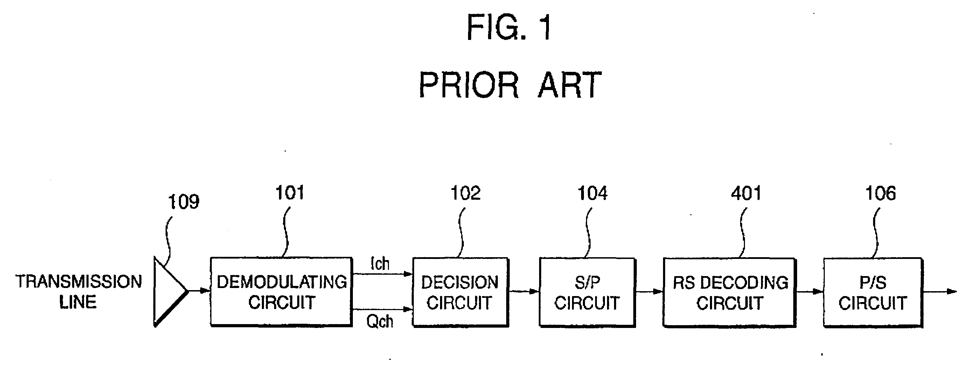

At first, the previous receiving circuits described above are explained in detail with reference to Figs. 1 to 4.

In Fig. 1, the Reed-Solomon code receiving circuit has a basic structure and is used in correcting burst errors by means of the Reed-Solomon code. It is assumed that a data stream of the Reed-Solomon codes is subjected to phase modulation or amplitude quadrature modulation in a predetermined manner and then is supplied to the receiving circuit.

Error correction using the Reed-Solomon code (hereinafter, referred to as "RS code") is executed by detecting an error position, calculating an amplitude of each error, lastly correcting the error by replacing a detected error symbol based on the amplitude of each error. A ratio of coding or performance of correcting may be normally represented as (n, k, t) and a relationship among these elements is represented as follows.

$$2t = n - k$$

Herein, n represents the total number of symbols in a block subjected to coding, k represents the number of information symbols in the block, and t represents the number of symbols which can be corrected in each a block.

RS coding comprises the steps of calculating redundant symbols including (n-k) symbols from k symbols of information data given within each block, adding the redundant symbols to given information symbols, and outputting them as n symbols of the RS code stream. Also, in RS coding, the data stream is treated at every one of the symbols and is not treated at every bit. Thus, one symbol is assumed to be equal to b bits. For example, in RS coding, when (204, 188, 8) are given as (n, k, t) and one symbol is defined by eight bits, the number of information bits per a block is 1504, the number of coded bits is 1632, and the number of bits which can be corrected becomes equal to 64.

Next, description is made about operations of the above Reed-Solomon receiving circuit with reference to Fig. 1. Herein, when a transmission path is given by a radio channel, signals which are received by an antenna 109 have been already subjected to RS coding, and the signals have been also already subjected to phase modulation or amplitude quadrature modulation. At first, a radio wave from the transmission path is received by the antenna 109, and supplied to a demodulating circuit 101 as signals. At the demodulating circuit 101, the signals are demodulated by a predetermined demodulation method (for example, phase demodulation or amplitude quadrature demodulation) into I-channel baseband signals (Ich) or Q-channel baseband signals (Qch). Next, at the demodulating circuit 101, the data stream is subjected to analog to digital (A/D) conversion to be converted into a digital data signal of M1 bits at a predetermined sampling rate and the resulting digital data signal is supplied to a decision circuit 102.

The decision circuit 102 decides the Ich and the Qch digital data signals in a predetermined manner, and provides each serial baseband data signal of M2 bits at every sampling time instant. The serial baseband data signals from the decision circuit 102 are supplied to an S/P circuit 104 to be converted into parallel data signals of b bits which specify a symbol, and to be supplied to a RS decoding circuit 401.

The RS decoding circuit 401 corrects an error or errors whenever a block (= n * b bits) of data are supplied from the S/P circuit 104, and supplies only information symbols other than redundant symbols to a P/S circuit 106 as parallel data in which a symbol is defined by b bits in number. Herein, a ratio of RS coding is (n, k, t), one block is equal to n symbols, and the information symbol is equal to k symbols.

In this technique, the RS decoding circuit 401 corrects burst errors due to an interference wave by using a normal error correcting method. Therefore, correction ability of the RS code depends on an expected maximum length of burst errors which occur on a generally used transmission path. Thus, data signals sampled at a sampling timing are converted into M2 bits of the base band data signal after the determination. If burst errors take place on the transmission path for L sampling timings at most, ability of correction of the RS code needed for correcting all of the burst errors is defined by an error correction ability factor and is given by:

$$2t >= 2 (M2 * L / b) \qquad (1)$$

For example, when use is made about the RS code of b=8, a modulating method of QPSK (M2 = 2), and the burst error length L equal to 20 samples, the ability factor t is equal to or greater than five. Therefore, when there is no error due to thermal noise, RS code is required which is capable of correcting at least five symbols (40 bits) per a block. Also, if the burst error length increases, correction ability of the RS code required must be increased. But, there is a problem that when the value of t increases, the frequency band on the transmission path is expanded in response to the increase of t, because the number of redundant symbols is increased by 2t. Therefore, as the burst error becomes longer, it is required to correct the burst errors with the width of the frequency band restricted to the allowable minimum range.

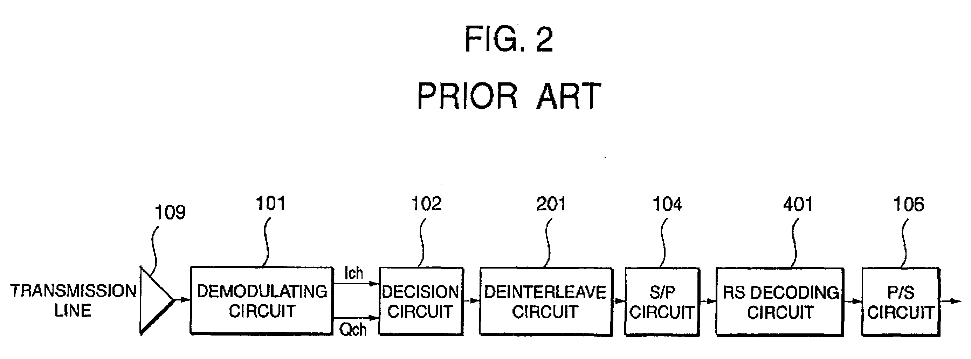

Next, description is made about the above described Reed-Solomon code receiving circuit employing the interleave technique in more detail with reference to Fig. 2. The illustrated receiving circuit is often used to correct error or errors when the burst error length becomes long. As shown in Fig. 2, the receiving circuit is similar to the receiving circuit shown in Fig. 1, except that an deinterleave circuit 201 is located before the S/P circuit 104 in Fig. 2. With this structure, burst errors can be dispersed by interleaving into a plurality of blocks, which has RS codes different from each other to some extent, and then RS decoding is performed. It is an object of the dispersion to reduce a correction ability of RS code and to decrease the width of the frequency band which is widened with an increase of redundant symbols. Herein, it is to be noted that signals which are received by the antenna 109 are subjected to interleaving on the RS coding carried out on a transmitter side.

The illustrated RS decoding circuit 401 in the receiving circuit shown in Fig. 2 performs general error correction in a manner similar to the receiving circuit shown in Fig. 1. Therefore, required correction ability of RS code t can be defined as follows.

$$2t >= 2 (M2 * L/b) /D \qquad (2)$$

Herein, D is a depth of interleave.

For example, in the above example described with reference to Fig. 1, when L is set to 200, resulting sets of D and t are as follows.

| D = 1 (no interleave) | ... t >= 100 |
|---|---|
| D = 4 | ... t >= 25 |
| D = 7 | ... t >= 8 |
| D = 13 | ... t >= 4 |

As shown above, by deepening a depth of interleave, it is possible to decrease redundancy of RS code and keep a frequency band from widening. But, there are problems that when the depth of interleave is deepened, a buffer size required in an interleave circuit and deinterleave circuit becomes large in size and, as a result, a delay time due to the buffer becomes long. The size of buffer (scale of the circuit) and the delay time are represented as follows.

The size or scale of the circuit becomes equal to  n * 8 * D  bits (required in both the interleave circuit and deinterleave circuit)

The delay time becomes equal to  n * 8 * D  bits (required in both the interleave circuit and deinterleave circuit)

For example, when the RS code is represented as (204, 188, 8) and D is equal to seven, each of the interleave circuit and deinterleave circuit 201 must have a memory capacity of 11,424 bits. Also, the sum of delay times of the interleave circuit and deinterleave circuit is equal to 11,424 bits, which may be not allowable in some system.

Therefore, the receiving circuit employing interleave technique is appropriate for narrowing a frequency band, but on the other hand, the circuit size and delay time are inevitably large and long.

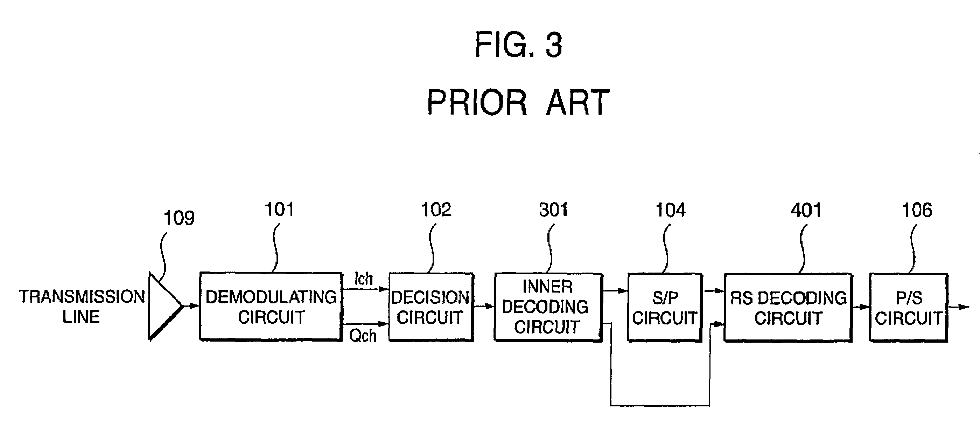

Also, the receiving circuit employing the erasure correcting scheme has been proposed and a block diagram of the circuit is shown in Fig. 3. Erasure correcting is performed by providing, in advance, a symbol location where an error occurs to the RS decoding circuit as an error location signal. It is assumed that s represents the number of symbols each of which an error occurs and location of the symbol is known and that e represents the number of symbols each of which an error occurs and location of the symbol is unknown. Relationship among the correction ability t and the above s and e is defined as follows.

$$2e + s <= 2t \qquad (3)$$

Thus, when an error location is unknown, the relationship of $e \leqq t$ holds. When only t symbols can be corrected per a block. However, locations of error symbols in a block are all known, the relationship of $s \leqq 2t$ holds, as a result, 2t of symbols can be corrected in each block. Therefore, in this method, although the same redundancy is provided, higher correction ability can be obtained.

The illustrated receiving circuit is assumed to be supplied through the antenna 109 with the data stream which have been already subjected to RS coding, and to then further perform coding (such as CRC) in order to detect errors. Also, receiving signals which are converted into serial base band data at the decision circuit 102 are decoded at an inner decoding circuit 301 in order to detect errors. After the decoding, RS code which takes away redundant bits for error detection are supplied to the RS decoding circuit 401 via the SP circuit 104. The error locations which are detected at the inner decoding circuit 301 are supplied to the RS decoding circuit 401 as error location signals.

Here, it is assumed that e represents the number of symbol error in a block, t represents correction ability required when no erasure correcting is performed, locations of the half of the error symbol are known, and t' represents the number of symbols which can be corrected when the erasure correcting is performed in the above situation. In this case, relationship of the elements is defined as follows.

$$t = e \qquad (4)$$

$$t' = 2(e/2) + e/2 = 1.5e = 1.5t \qquad (5)$$

Therefore, in this method, although the same redundancy of RS code are provided, higher correction ability (i.e. 1.5 times) can be obtained.

The method, however, has disadvantage that characteristics of detecting error locations depends on only an ability of the inner decoding circuit 301. Therefore, when the number of errors becomes large, the number of symbol error e which can be detected by the inner decoding circuit 301 is increased, as a result, 2e + s > 2t stands for at the RS decoding circuit 401, the RS decoding circuit 401 can not perform proper error correcting, on the contrary, may perform false correcting (change to incorrect contents) so that characteristics of error ratio is degraded compared to when there is no RS code.

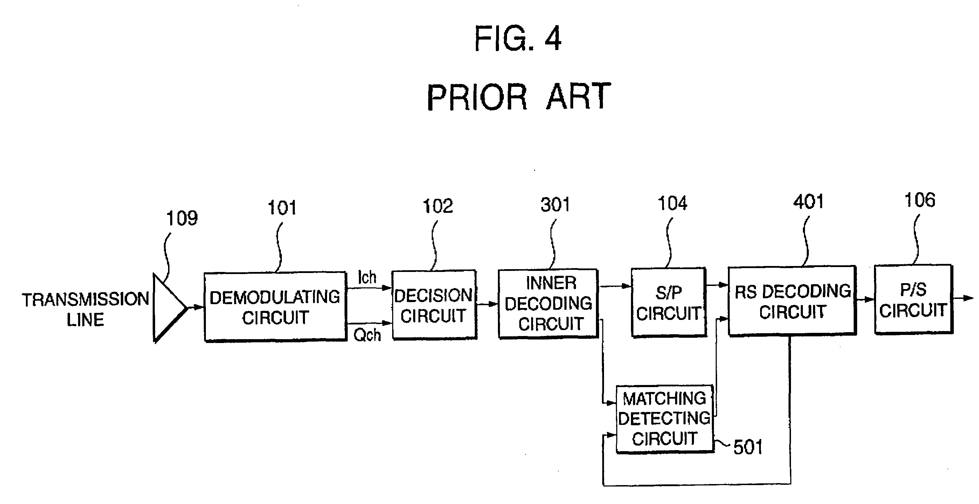

Further, in order to overcome the above disadvantage of the erasure correcting receiving circuit, an improved erasure correcting receiving circuit is disclosed in Japanese Laid Open Publication No. S56-8946(namely, 8946/1981). A block diagram of the improved erasure correcting base receiving circuit is shown in Fig. 4.

As described above, in RS decoding, at first, error location is detected. Herein, the RS decoding circuit 401 shown in Fig. 4 detects an error location and uses the result in the circuit. The result of the error location detecting is also supplied to a matching detecting circuit 501. The matching detecting circuit 501 compares the result of error location detecting received from the inner decoding circuit 301 with the result of error location detecting received from the RS decoding circuit 401, and supplies a control signal representing the result of comparison to RS decoding circuit 401.

The RS decoding circuit 401 performs erasure correcting using error location signals supplied from the inner decoding circuit 301 when the circuit 401 detects that the received control signal is representative of coincidence between the error locations. When the circuit 401 detects that the received control signal shows a difference of the error locations, the circuit 401 does not perform error correcting, eliminates the redundant symbols from the received data to produce the information symbols, and supplies only the information symbols to the P/S circuit 106. This is because there might be a large number of errors whose locations are not detected at the inner decoding circuit 301, when the results of error location detecting of the both circuits are incoincident with each other On this assumption, it is judged that error correction is wrongly carried out at the RS decoding circuit 401 at a high probability. Therefore, it is preferable that wrong error correcting is avoided.

However, in the method disclosed in Japanese Laid Open Publication No. S56-8946, proper error correcting can be made only when there are few errors, and there is a problem that burst errors remain uncorrected because the RS decoding circuit 401 can not perform error correcting at all when errors continuously occurs for a long time such as the burst errors.

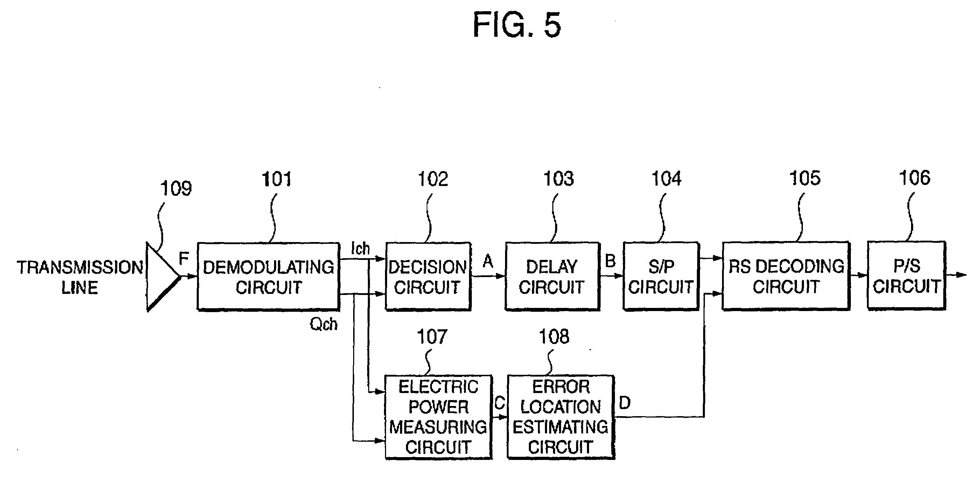

Next, description is made about a Reed-Solomon receiving circuit according to a first embodiment of the invention with reference to Fig. 5. It is assumed that signals are received through a radio channel or path by the antenna 109 and have been already subjected to RS coding and phase modulation or amplitude quadrature modulation, and burst errors occur due to an interference wave temporarily appearing on the transmission path.

The antenna 109 converts a radio wave received from the transmission path into the electric signals F and supplies them to the demodulating circuit 101. The demodulating circuit 101 demodulates the electric signals F in a predetermined method to produces Ich and Qch data streams. The illustrated demodulator 101 carries out the A/D conversion by sampling the Ich and the Qch data streams at a predetermined sampling rate to provide digital signals each of which has M1 bits in size. The digital signals are sent at each sample to both the decision circuit 102 and a electric power measuring circuit 107.

The decision circuit 102 makes a decision for the digital signals (sampled data) in a predetermined method and converts the digital signals into serial base band signals A having M2 bits in size. A delay circuit 103 delays the serial base band signals A by a block of an RS decoding circuit 105(described in detail later) and thereafter supplies the delayed serial baseband signals B to an S/P circuit 104. The S/P circuit 104 converts the delayed serial baseband signals B into parallel data signals of b bits. Here, b bits corresponds to a single symbol of the RS decoding circuit 105.

In the illustrated example, the electric power measuring circuit 107 calculates or measures a moving average of electric power of the Ich and the Qch data streams which are supplied from the demodulating circuit 101 at each sampling timing. The calculated results C are supplied from the electric power measuring circuit 107 to an error location estimating circuit 108. The error location estimating circuit 108 includes a circuit which stores a predetermined threshold value, the maximum number of the moving average, and a time at which the maximum number of the moving average appears. The estimating circuit 108 compares the moving average with the predetermined threshold value at each sampling timing, and discards the moving average when the value of the moving average is smaller than the predetermined threshold value. On the other hand, the estimating circuit 108 successively updates a current maximum value of the moving average by another moving average appearing when the value of the moving average is larger than the predetermined threshold value and is larger than the current maximum number of moving average.

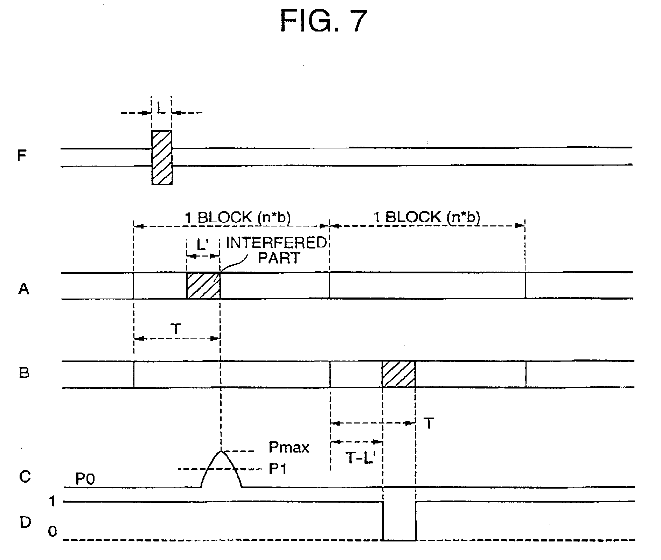

The error location estimating circuit 108 repeats this operation for a duration corresponding to a block of the RS decoding circuit 105. If the estimating circuit 108 finishes detecting the maximum moving average in a block, the estimating circuit 108 supplies the maximum moving average to the RS decoding circuit 105 as error location signals D at a time instant shown in Fig. 7 in the next block. In this example, a time instant at which the error location signal D takes "0" level represents the error location. A description about Fig. 7 will be made in detail later.

The RS decoding circuit 105 performs erasure correction of parallel data of b bits from the S/P circuit 104 on the basis of the error location signals D and supplies information bits except the remaining redundant bits in the corrected data to the P/S circuit 106 as the parallel data signal of b bits. The P/S circuit 106 converts the parallel data signal to a serial data signal.

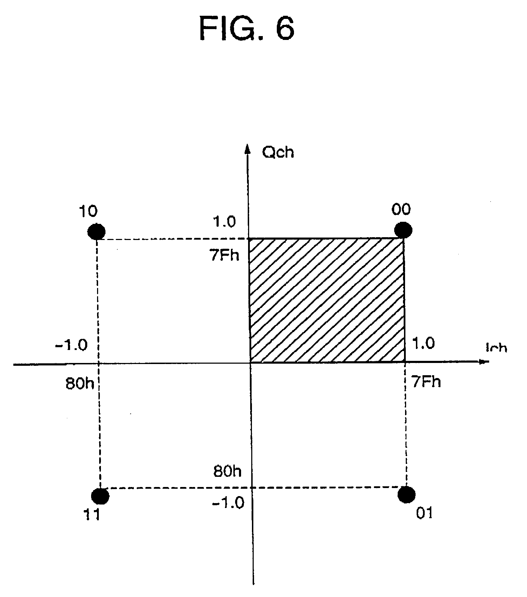

Next, operations of the circuits shown in Fig. 5 are described with reference to Figs. 6 and 7. But, it is assumed that a coding rate of the RS decoding circuit is represented as (n, k, t), and a symbol is equal to b bits.

An electric wave including an interference wave is received from the transmission path, is converted to analog signals at the antenna 109, and is supplied to the demodulating circuit 101. The demodulating circuit demodulates the signals in accordance with a predetermined demodulating method (for example, phase modulation or amplitude quadrature modulation) to produce Ich or Qch data signals. Next, at the demodulating circuit 101, the data signals are subjected to analog to digital conversion to be rendered into the digital data signal of M1 bits at a predetermined sampling rate and the resulting digital data are supplied to a decision circuit 102 and the electric power measuring circuit 107.

The decision circuit 102 makes a decision for the Ich data and the Qch data signals in a predetermined manner, and provides M2 bits of serial base band data for each sampling timing. For example, when QPSK method is used to modulate and M1 is equal to 8 bits.

Temporarily referring to Fig. 6, the decision circuit 102 produces an output data signal of (00) when the Ich and the Qch data signals take (7Fh,7Fh). Likewise, the output data signal of the decision circuit 102 becomes (10) in response to the Ich and the Qch data signal of (80h,7Fh). The circuit 102 produces "00" as the output signal when the Ich and Qch data signals, such as (40h,30h) falls within the first quadrant, as shown by a shaded portion in Fig. 6.

The output data signals A from the decision circuit 102 are supplied to the delay circuit 103. Herein, the delay circuit 103 delays the signals A by a delay time equal to a block of the RS decoding circuit (i.e. n * b bits) as shown in Fig. 7, to supply delayed signals B to the S/P circuit 104.

The electric power measuring circuit 107 measures the moving average C of electric power of sampled data signals of the Ich and the Qch data signals sent from the demodulating circuit 101. When the electric power of the sampled signals at a time instant t is denoted by p(t) and the length of the maximum of an interference wave on the transmission path is denoted as L, the moving average P(t) is represented by the following equation.

$$p(t) = \left\{ \sum_{k=t-L'}^{k=t} p(k) * p(k) \right\} / L' \qquad (6)$$

Herein,

$$L' = L * M2 \qquad (7)$$

As shown by C in Fig. 7, the moving average p(t) takes a maximum value when an interference wave imposed is finished.

The error location estimating circuit 108 compares the moving average p(t) with a predetermined threshold value P1 whenever the moving average is supplied to the error location estimating circuit 108. If the error location estimating circuit 108 determines that the moving average p(t) is less than the threshold value P1, the circuit 108 discards the moving average P(t) and otherwise, proceeds to the next operation. The threshold value P1 is determined with a margin in relation to a moving average value Po which is calculated on no interference wave. Such a margin is helpful to prevent the moving average value Po from wrongly exceeding the threshold value P1.

If P(t) is larger than P1, P(t) is compared with current maximum value Pmax. If P(t) <= Pmax, P(t) is discarded, and if P(t) > Pmax, Pmax is replaced with P(t) and a time relating to P(t) is stored as time T. Then, this operations are repeated for a block of the RS decoding circuit 105 (n * b bits).

When operations performed for each one block are completed, currently stored time T becomes the maximum value of moving averages in the block. Thus, the error location estimating circuit 108 determines that there is a L' bits length of burst errors due to existence of an interference wave between a time point T-L' and a time point T, and sets values of error location signals D between the time point T-L' and the time point T to "0", as the time chart denoted by "D" in Fig. 7 and supplies them to the RS decoding circuit 105. Each error location signals D of "0" means that the data signal corresponding to the location indicated by the error location signal D is erroneous.

RS decoding circuit 105 corrects errors in response to a block of data from the S/P circuit 104. In this case, information symbols in the data except redundancy symbols are supplied to P/S circuit 106 as a symbol (b bits) in parallel. Herein, it is assumed that the coding rate is given by (n, k, t), as mentioned before.

When each error location signals D from the error location estimating circuit 108 takes "1", RS decoding circuit 105 does not perform erasure correcting because there is no influence of an interference wave. Therefore, at this point, the number e of symbols which can be corrected is equal to t. When each error location signal takes "0", the RS decoding circuit 105 performs erasure correcting. As described above, when the length of the interference wave is L, the error location estimating circuit 108 judges that the burst error of L' bit length is caused to occur, as a time chart denoted by "D" in Fig. 7.

Herein, consideration is made about correction abilities t1 and t2 of the RS decoding circuit 105. Herein, t1 is representative of the correction ability required to obtain an error rate characteristic similar to that obtained in the absence of any burst error, when erasure correcting is carried out by the RS decoding circuit 105. On the other hand, the correcting ability t2 is required when no erasure correcting is carried out by the RS decoding circuit 105.

$$t1 = 2e + L'/b \tag{8}$$

$$t2 = 2(e + L'/b) = t1 + L'/b \tag{9}$$

From the above equations, it is understood that, if erasure correcting may be carried out only on detection of the interference, all of the burst errors can be accomplished with a correcting ability which is decreased by L'/b, as compared to a correcting ability obtained on carrying out on erasure correcting. Such a lower correcting ability brings about a decrease of redundancy and serves to suppress an expansion of a frequency band which might be caused by the RS coding.

In general, to correct burst errors in addition to common errors, it is necessary to increase a correcting ability in addition to a usual error due to thermal noise. In this invention, however, an increase of redundancy can be avoided because erasure correcting is performed when burst errors occur.

Also, in the prior art, burst errors are equally distributed into blocks in RS codes by using an interleave method to avoid increase of redundancy and to correct a long term of burst errors and as a result, a burden of correcting ability at each block is lightened. Herein, correcting ability t3 is shown by the following equation (Depth of interleave is denoted as D).

$$t3 = 2(e + L'/b/D) \tag{10}$$

On the other hand, in the invention, the correcting ability t3 is improved by using the following equation (11). Herein, depth of interleave D' is half of the above prior depth D (equation (12)).

$$t3 = 2e + L'/b/D' = 2(e + L'/b/D) \tag{11}$$

$$D' = D/2 \tag{12}$$

Therefore, in the invention, even if a long term burst error takes place and it is required to distribute the burst errors using interleave, it is possible to reduce the scale of the interleave circuit in half. In other words, if the same depth of interleave is used, the receiving circuit of the invention can decrease redundancy compared to the prior circuit.

Also, combining inner decoding circuit of the prior art and inner decoding circuit of the invention, it is possible to perform erasure correcting independent of the number of errors by (1) estimating error locations of burst errors by calculating the moving average when electric power of interference wave is large or (2) detecting error locations by an inner decoding circuit when electric power of interference wave is small or errors occur due to the other causes.

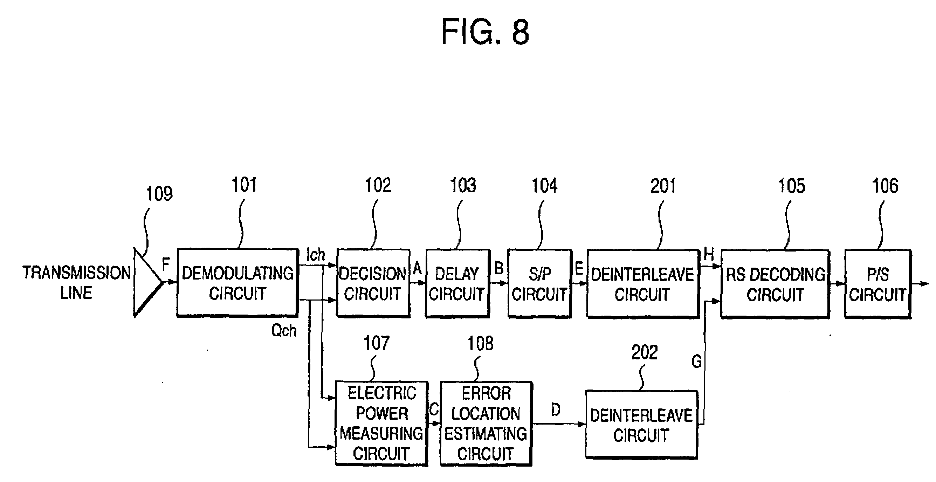

Fig. 8 shows a block diagram of a receiving circuit of a second embodiment of the invention. Configuration of the receiving circuit is different from the first embodiment of the invention in that deinterleave circuits 201 and 202 are added. Thus, description about the other elements of the receiving circuit of the second embodiment is omitted. In this embodiment, burst errors are distributed by interleaving because a wavelength of an interference wave is large and burst errors can not be completely corrected using RS decoding circuit for a block. As a result, the number of the burst errors in each block is reduced and burden of correction ability of the RS decoding circuit 105 is lightened. Herein, it is assumed that receiving signal has been already subjected to the RS coding and then interleave.

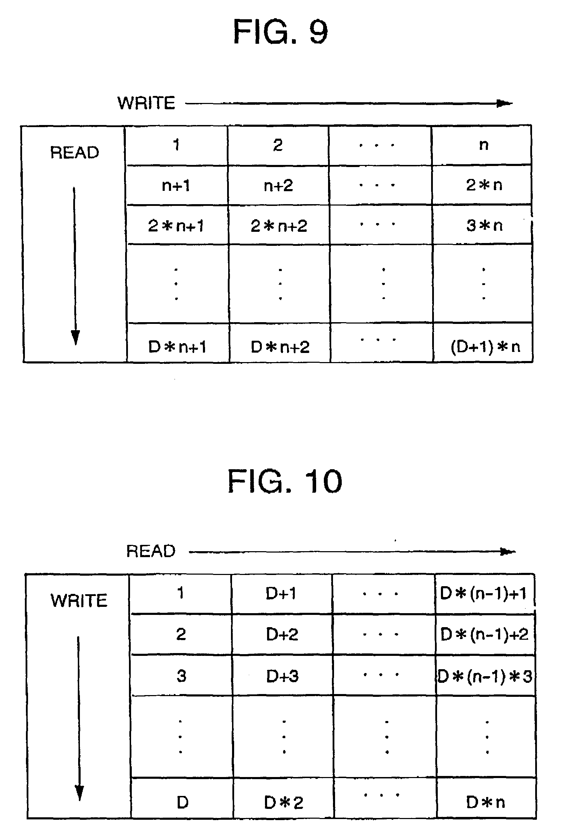

Fig. 9 shows a mapping for interleave process. Herein, the mapping includes n (the number of symbols in a block of the RS code) columns of cells and each cell in the mapping includes b bits because the interleave process is performed in a unit of a symbol of RS code, i.e. b bits, rather than a unit of a bit. When the number of steps (herein, referred to as 'depth') becomes greater, the burst errors occur on a transmission path are distributed. Therefore, it is the most efficient to uniformly distribute the number of the symbols to each block of the RS code as many as possible.

The following description will be directed to a relationship between data before interleave and data after interleave.

Before interleave: 1, 2, 3, ..., n - 1, n, n + 1, n + 2, ...
After interleave: 1, n + 1, 2n + 1, ..., D*n + 1, 2, n+2, 2n + 2, ...

The deinterleave circuit 201 deinterleaves or maps b bits of parallel data from the S/P circuit 104. Mapping of the deinterleave circuit 201 is executed in accordance with a table illustrated in Fig. 10. Each cell in the mapping includes b bits because deinterleave process is performed in a unit of b bits in a manner similar to the interleave process.
The following relationship is shown between data before deinterleave and data after deinterleave.

Before deinterleave: 1, 2, 3, ..., D, D + 1, D + 2, ...
After deinterleave: 1, D + 1, 2*D + 1, ...

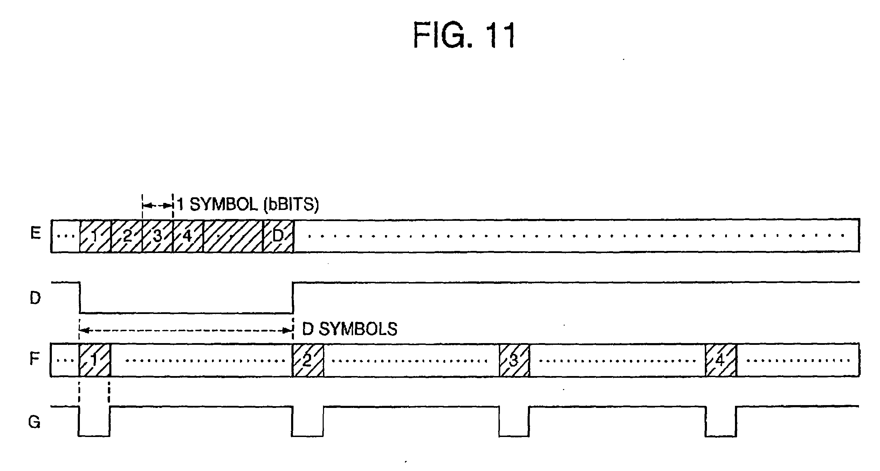

If burst errors occur and d symbols of continuous errors occur in an output of the S/P circuit 104 as shown in a time chart denoted by "E" in Fig. 11 (represented as a shaded part), deinterleave circuit 201 distributes the above errors every d symbols in the manner denoted by "F" in Fig. 11. Therefore, error location signals supplied to the RS decoding circuit 105 at this point should be distributed as similar to the burst errors.

A mapping of the deinterleave circuit 202 is the same as the mapping of the deinterleave circuit 201. But, the deinterleave circuit 202 performs deinterleave in a unit of a bit rather than a symbol. The error location signals D from the error location estimating circuit 108 are deinterleaved at the deinterleave circuit 202 as a time chart denoted by "G" in Fig. 11. The RS decoding circuit 105 receives the error symbol and error location signal "0" corresponding to the error symbol at the same timing and then performs erasure correcting as similar to the first embodiment of the invention.

Therefore, even if burst errors occur for a long time and interleave process is required, erasure correcting can be performed by interleaving error location signals supplied to the RS decoding circuit 105 in addition to error symbol. Consequently, it is possible to reduce the depth of interleave to half of the original depth as shown in the equations (11) and (12) and as a result, scale of the circuit can be reduced.

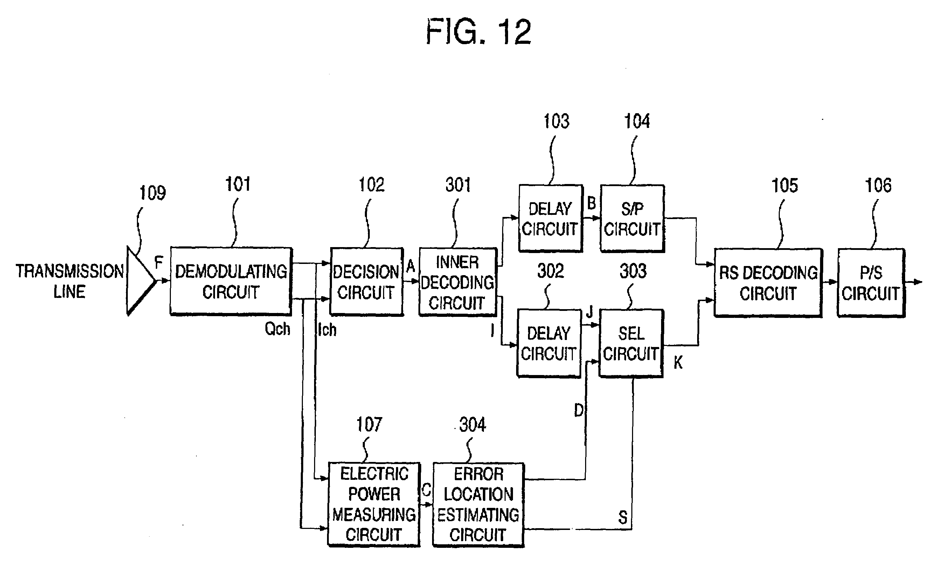

Fig. 12 shows a block diagram of a receiving circuit of a third embodiment of the invention. Configuration of the receiving circuit is different from the first embodiment of the invention in that an inner decoding circuit 301, a delay circuit 302, an SEL circuit 303 are added and the error location estimating circuit 304 is modified. Thus, description about the other elements of the receiving circuit is omitted. Herein, it is assumed that receiving signal has been already RS coded and further performed a coding in order to achieve a predetermine error detection (such as CRC).

In this embodiment, even if an electric power of an interference wave is not large and the error location estimating circuit 108 can not estimate locations of burst errors or even if there is an error which occurs due to a cause other than the interference wave, a correct error location signals can be supplied to RS decoding circuit 105.

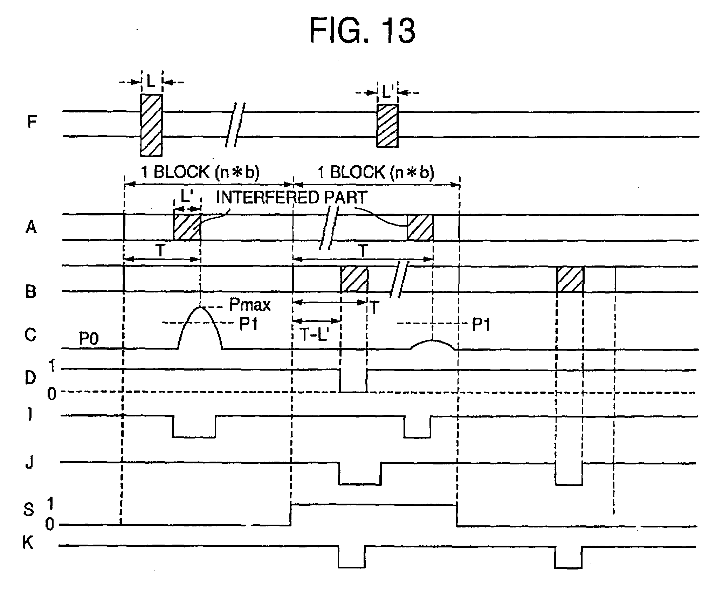

Receiving signals which are converted to serial base band data at the decision circuit 102 are decoded at the inner decoding circuit 301 for error detecting. After the decoding, information bits are supplied to the delay circuit 103 except redundancy bits appended for the error detecting (a time chat denoted by "A" in Fig. 13). Next, error location detected is supplied to the delay circuit 302 as location signal I. The error signal I is set to "1" when there is no error, and is set to "0" when there is an error as a time chart denoted by "I" in Fig. 13.

The error location signal I is then delayed at the delay circuit 302 by a block of the RS decoding circuit 105 as a time chart denoted by "J" in Fig. 13 and is supplied to the SEL circuit 303. The SEL circuit 303 is a switching circuit and supplies the error location signal J as the error location signal to the RS decoding circuit 105 when a control signal S from the error location estimating circuit 304 is set to "0". On the other hand, the SEL circuit 303 supplies the error location signal D as the error location signal when a control signal S is set to "1".

Fig. 13 shows a behavior in two cases when an electric power of an interference wave is large and is not large. When the electric power of the interference wave is large, the electric power measuring circuit 107 and the error location estimating circuit 304 estimate the maximum electric power moving average, estimate locations of burst errors, and supply the error location signal D representing the estimated locations to the SEL circuit 303. The error location estimating circuit 304 set the control signal S to "1", which makes a value of the error location signal D "0" as a time chart denoted by "S" in Fig. 13, when it is recognized that there is an interference wave.

When the interference wave is small and it can not be recognized that there is an interference wave or when an error occurs due to a cause other than the interference wave, the value of the control signal is fixed to "0". When an electric power of an interference wave is large, error detection at the inner decoding circuit 301 may be incorrect or an error in which its error location can not be detected may occur. Therefore, in this case, the value of the control signal S is "1", the SEL circuit 303 selects the error location signal D, a correct error location information is supplied to the RS decoding circuit 105 as similar to the first embodiment, and the RS decoding circuit 105 can perform erasure correcting.

On the other hand, when an electric power of an interference wave is relatively small and a moving average of the electric power is less than a threshold value P1 as a time chart denoted by "C" in Fig. 13 or when there is no interference wave but an error occurs due to a cause other than the interference wave, the error location estimating circuit 304 can not recognize an existence of the interference wave, and always sets the error location signal D and the control signal S to "1" and "0", respectively. When an electric power of an interference is small, the number of error is reduced according to the electric power as a matter of course, and an error location detecting signal I of the inner decoding circuit 301 is validated. Then the SEL circuit 303 selects the error location detecting signal I, a correct error location information is supplied to the RS decoding circuit 105.

As described above, in this embodiment, error location detecting is performed by both of the inner decoding circuit 301 and the error location estimating circuit 304, either of error location signal from the inner decoding circuit 301 or error location signal from the error location estimating circuit 304 is selected based on an electric power of an interference wave, and the selected signal is supplied to the RS decoding circuit 105. Therefore, the receiving circuit of the embodiment can perform erasure correcting at the RS decoding circuit 105 regardless of an electric power of an interference wave.

Therefore, the receiving circuit of the invention may prevent redundancy from increasing by performing erasure correcting when burst errors occur.

Further, the receiving circuit of the invention may reduce the scale of interleave even if it is required to distribute burst errors using interleave process because the length of the burst errors is large. In other words, using the same depth of interleave process, the receiving circuit may make increase of redundancy lower, as compared to the prior art.

Still further, by using both of error detecting method of the invention and error detecting method of the prior art, it is possible to perform erasure correcting regardless of the number of errors.

Also, it is noted that act of the receiving circuit of the invention may be controlled by both the above circuits and control software. The software may be provided to the receiving circuit via medium, for example floppy disk, optical disk, and the like.

**Claims**

**1.** A Reed-Solomon code receiving circuit comprising:

a demodulating circuit (101) which demodulates receiving signals from a transmission path in a predetermined method, converts the demodulated signals to digital signals at a predetermined sampling rate, and produces the digital signals as data samples;

a decision circuit (102) which makes a decision for the data samples in a predetermined method and converts the data samples to serial base band signals;

an S/P circuit (104) which converts the serial base band signals to a predetermined number of bits of parallel data;

an electric power measuring circuit (107) which calculates a moving average of electric power of the data samples from the demodulating circuit (101) at every sampling time;

an error location estimating circuit (108) which supplies signals representing whether or not burst errors occur in a block and signals representing the locations of the burst errors as error location signals based on the moving average;

an RS decoding circuit (105) which corrects errors and supplies information symbols except redundant symbols as parallel data in a unit of a symbol whenever a block of the parallel data are received from the S/P circuit (104), and which performs erasure correcting when the error location signals are received from the error location estimating circuit (108) in advance; and

a P/S circuit (106) which converts the parallel data supplied from the RS decoding circuit (105) to serial data.

2. The Reed-Solomon code receiving circuit claimed in claim 1 further comprising:

a delay circuit (103) which delays the serial base band signals supplied from the decision circuit (102) by a block at the RS decoding circuit (105).

3. A Reed-Solomon code receiving circuit comprising:

a demodulating circuit (101) which demodulates receiving signals from a transmission path in a predetermined method, converts the demodulated signals to digital signals at a predetermined sampling rate, and supplies the digital signals as data samples;
a decision circuit (102) which makes a decision for the data samples in a predetermined method and converts the data samples to serial base band signals;
an S/P circuit (104) which converts the serial base band signals to a predetermined number of bits of parallel data;
a first deinterleave circuit (201) which deinterleaves the parallel data supplied from the S/P circuit (104);
an electric power measuring circuit (107) which calculates a moving average of electric power of the data samples from the demodulating circuit (101) at every sampling time;
an error location estimating circuit (108) which supplies signals representing whether or not burst errors occur in a block and signals representing the locations of the burst errors as error location signals based on the moving average;
a second deinterleave circuit (202) which deinterleaves the error location signals supplied from the error location estimating circuit (108) and supplies the deinterleaved signals as error location signals;
an RS decoding circuit (105) which corrects errors and supplies information symbols except redundant symbols as parallel data in a unit of a symbol whenever a block of the parallel data are received from the first deinterleave circuit (201), and which performs erasure correcting when the error location signals are received from the second deinterleave circuit (202) in advance; and
a P/S circuit (106) which converts the parallel data supplied from the RS decoding circuit (105) to serial data.

4. The Reed-Solomon code receiving circuit claimed in claim 3 further comprising:

a delay circuit (103) which delays the serial base band signals supplied from the decision circuit (102) by a block at the RS decoding circuit (105).

5. A Reed-Solomon code receiving circuit comprising:

a demodulating circuit (101) which demodulates receiving signals from a transmission path in a predetermined method, converts the demodulated signals to digital signals at a predetermined sampling rate, and supplies the digital signals as data samples;
a decision circuit (102) which makes a decision for the data samples in a predetermined method and converts the data samples to serial base band signals;
an inner decoding circuit (301) which decodes the serial base band signals supplied from the decision circuit (102), supplies the decoded data, detects errors, and supplies locations of the detected errors as error location signals;
an S/P circuit (104) which converts the decoded data supplied from the inner decoding circuit (301) to a predetermined number of bits of parallel data;
an electric power measuring circuit (107) which calculates a moving average of electric power of the data samples from the demodulating circuit (101) at every sampling time;
an error location estimating circuit (304) which supplies signals representing whether or not burst errors occur in a block and signals representing the locations of the burst errors as error location signals based on the moving average;
an SEL circuit (303) selects the error location signals supplied from the inner decoding circuit (301) or the error location signals supplied from the error location estimating circuit (304) based on the signals representing whether or not burst errors occur, and supplies the selected signal as error location signals;

an RS decoding circuit (105) which corrects errors and supplies information symbols except redundant symbols as parallel data in a unit of a symbol whenever a block of the parallel data are received from the S/P circuit (104), and which performs erasure correcting when the error location signals are received from the SEL circuit (303) in advance; and

a P/S circuit (106) which converts the parallel data supplied from the RS decoding circuit (105) to serial data.

6. The Reed-Solomon code receiving circuit claimed in claim 5, wherein the SEL circuit (303) selects the error location signals supplied from the error location estimating circuit (304) and supplies it as error location signals, when the signals representing whether or not burst errors occur supplied from the error location estimating circuit (304) represent that the burst error occur.

7. The Reed-Solomon code receiving circuit claimed in claim 5 further comprising:

a first delay circuit (103) which delays the decoded data supplied from the inner decoding circuit (301) by a block at the RS decoding circuit (105); and

a second delay circuit (302) which delays the error location signals supplied from the inner decoding circuit (301) by a block at the RS decoding circuit (105).

8. A Reed-Solomon code receiving circuit which receives signals and corrects errors in the signals using Reed-Solomon code, comprising:

an electric power measuring circuit (107) which calculates a moving average of electric power of the receiving signals; and

an error location estimating circuit (108,304) which supplies signals representing the locations of the burst errors as error location signals based on the moving average,

the Reed-Solomon code receiving circuit performing erasure correcting only when the error location signals are produced from the error location estimating circuit (108, 304) in advance.

9. The Reed-Solomon code receiving circuit claimed in claim 8, wherein in correcting errors in the receiving signals, redundant symbols are omitted which are added in order to correct errors.

10. The Reed-Solomon code receiving circuit claimed in claim 9, wherein the receiving signals and the error location signals are deinterleaved before correcting errors.

11. The Reed-Solomon code receiving circuit claimed in claim 8 further comprising:

an inner decoding circuit (301) which detects errors and supplies locations of the detected errors as error location signals;

wherein the error location estimating circuit (108, 304) supplies signals representing whether or not burst errors occur,

in correcting errors, either the error location signals supplied from the error location estimating circuit (108, 304) or the error location signals supplied from the inner decoding circuit (301) is selected based on the signals representing whether or not burst errors occur.

12. A method of correcting errors in response to signals using Reed-Solomon code, the method comprises the steps of:

calculating a moving average of electric power of the receiving signals;

supplying signals representing the locations of the burst errors as error location signals based on the moving average; and

performing erasure correcting, when the error location signals are received.

13. A recording medium readable by a computer, tangibly embodying a program of instructions executable by the computer to perform a method of correcting errors in receiving signals using Reed-Solomon code, the method comprises the steps of:

calculating a moving average of electric power of the receiving signals;

supplying signals representing the locations of the burst errors as error location signals based on the moving average; and

performing erasure correcting, when the error location signals are received.

**14.** A method of detecting a burst error in response to a reception signal subjected to Reed-Solomon coding, comprising the steps of:

calculating a moving average of electric power in the reception signal; and

monitoring the moving average calculated to judge whether or not the burst error is caused to occur in the reception signal.

# FIG. 1
# PRIOR ART

TRANSMISSION LINE — 109 → DEMODULATING CIRCUIT (101) → [Ich / Qch] → DECISION CIRCUIT (102) → S/P CIRCUIT (104) → RS DECODING CIRCUIT (401) → P/S CIRCUIT (106) →

EP 1 009 123 A2

## FIG. 2
## PRIOR ART

109 TRANSMISSION LINE → 101 DEMODULATING CIRCUIT → (Ich, Qch) → 102 DECISION CIRCUIT → 201 DEINTERLEAVE CIRCUIT → 104 S/P CIRCUIT → 401 RS DECODING CIRCUIT → 106 P/S CIRCUIT →

# FIG. 3

# PRIOR ART

TRANSMISSION LINE → [109 ▷] → [101 DEMODULATING CIRCUIT] —Ich→ [102 DECISION CIRCUIT] → [301 INNER DECODING CIRCUIT] → [104 S/P CIRCUIT] → [401 RS DECODING CIRCUIT] → [106 P/S CIRCUIT] →

EP 1 009 123 A2

# FIG. 4
## PRIOR ART

# FIG. 5

TRANSMISSION LINE

109

101 DEMODULATING CIRCUIT

Ich

Qch

102 DECISION CIRCUIT

A

103 DELAY CIRCUIT

B

104 S/P CIRCUIT

105 RS DECODING CIRCUIT

106 P/S CIRCUIT

107 ELECTRIC POWER MEASURING CIRCUIT

C

108 ERROR LOCATION ESTIMATING CIRCUIT

D

F

EP 1 009 123 A2

# FIG. 6

# FIG. 7

# FIG. 8

EP 1 009 123 A2

# FIG. 9

WRITE ————————————————————→

| READ ↓ | 1 | 2 | · · · | n |
|--------|-----|-----|-------|-------|
| | n+1 | n+2 | · · · | 2*n |
| | 2*n+1 | 2*n+2 | · · · | 3*n |
| | ⋮ | ⋮ | ⋮ | ⋮ |
| | D*n+1 | D*n+2 | · · · | (D+1)*n |

# FIG. 10

READ ————————————————————→

| WRITE ↓ | 1 | D+1 | · · · | D*(n−1)+1 |
|---------|-----|-----|-------|-----------|
| | 2 | D+2 | · · · | D*(n−1)+2 |
| | 3 | D+3 | · · · | D*(n−1)*3 |
| | ⋮ | ⋮ | ⋮ | ⋮ |
| | D | D*2 | · · · | D*n |

# FIG. 11

EP 1 009 123 A2

# FIG. 12

# FIG. 13